# EUROPEAN PATENT APPLICATION

(11) **EP 4 354 692 A1**
(43) Date of publication of application: **17.04.2024**
(21) Application number: 22891408.1
(22) Date of filing: 25.05.2022
(51) Int. Cl.: H02J 7/00, H02M 1/42

(54) **WORKING MODE SWITCHING CONTROL METHOD AND DEVICE FOR VEHICLE-MOUNTED CHARGER, AND VEHICLE-MOUNTED CHARGER**

(30) Priority: 15.11.2021 CN 202111369350
(71) Applicant: Sungrow Power Supply Co., Ltd., Hefei, Anhui 230088 (CN)
(72) Inventor: WANG, Hao, Hefei, Anhui 230088 (CN)
(74) Representative: Rooney, John-Paul
(86) International application number: PCT/CN2022/094856
(87) International publication number: WO 2023/082598

(57) **Abstract**

The present application relates to the technical field of vehicle-mounted charging, and provides a working mode switching control method and device for a vehicle-mounted charger, and a vehicle-mounted charger. The working mode switching control method for a vehicle-mounted charger comprises the following steps: obtaining a working mode switching signal of a vehicle-mounted charger, wherein the working mode switching signal comprises a switching signal for switching, in different power modules of the vehicle-mounted charger, the voltage of a direct-current bus controlled by means of an original power module to the voltage of a direct-current bus controlled by a power module to be started; according to the working mode switching signal of the vehicle-mounted charger, firstly controlling the power module to be started to start by using a current source control mode and adjusting a current given value according to a working condition until the required power of a system is borne; and controlling a control mode of the power module to be started to be switched to a voltage source control mode, and causing same to control the voltage of the direct-current bus. In the present invention, when the vehicle-mounted charger performs working mode switching, power supply interruption of a low-voltage end is avoided while the voltage stability of the direct-current bus is ensured.

## Description

This application claims the priority to Chinese Patent Application No. 202111369350.1, titled "ON-BOARD CHARGER SYSTEM, METHOD AND DEVICE FOR CONTROLLING THE SAME TO SWITCH BETWEEN OPERATING MODES", filed on November 15, 2021 with the China National Intellectual Property Administration, which is incorporated herein by reference in its entirety.

### FIELD

The present application relates to the technical field of charging of vehicles, and in particular to an on-board charger system, as well as a method and a device for controlling the on-board charger system to switch between operating modes.

### BACKGROUND

An on-board charger system is an energy router arranged in vehicles. At present, the common on-board charger system can transmit electric energy from the alternating current end to the high-voltage battery through the direct current bus, and can also convert the electric energy of the high-voltage battery and then transmit the converted electric energy to the alternating current end through the direct current bus. In addition, low-voltage electrical appliances in the vehicles can be charged at the alternating current end or by the high-voltage battery through the direct current bus. That is, the on-board charger system can operate in various modes. A voltage across the direct current bus is prone to instability in case of switch from one operating mode to another, and even a switch from one power module to another involved in some cases. In order to avoid inrush current and voltage instability, the on-board charger system is generally shut down and then is started in the next operating mode. This is less inefficient and results in a power outage of the low-voltage electrical appliances, and consequently poor user experience.

### SUMMARY

The technical problem to be solved is how to avoid the power outage of the low-voltage electrical appliances and stabilize the voltage across the direct current bus in case of switch by the on-board charger system between operating modes.

In order to solve the above technical problems, a method for controlling the on-board charger system to switch between operating modes is provided according to the present application. The method includes: acquiring an operating mode switching signal for the on-board charger system, where the operating mode switching signal is indicative of a switch from an original power module in the on-board charger system to a to-be-started power module in the on-board charger system to control a voltage across a direct current bus; controlling the to-be-started power module to start in a current source mode and adapt a given current to an operating condition until a power demand of the on-board charger system is met, based on the operating mode switching signal; and switching the to-be-started power module to a voltage source mode and controlling the voltage across the direct current bus by the to-be-started power module.

Optionally, the power demand is a total power demanded by the on-board charger system.

Optionally, the controlling the to-be-started power module to start in a current source mode and adapt a given current to an operating condition until a power demand of the on-board charger system is met includes: starting the to-be-started power module in the current source mode and changing the given current from a first initial current to a target current. The first initial current depends on an operating state of the to-be-started power module before the switch. The target current depends on the total power and a port voltage of the to-be-started power module.

Optionally, the first initial current is determined, depending on the operating state of the to-be-started power module before the switch, by: acquiring the operating state and a sampled port current of the to-be-started power module before the switch; and determining the sampled port current as the first initial current.

Optionally, the sampled port current is acquired at an alternating current port or a high-voltage port of the on-board charger system.

Optionally, the starting the to-be-started power module in the current source mode includes: switching an operation mode selection switch of the to-be-started power module to the current source mode and starting the to-be-started power module in the current source mode.

Optionally, the starting the to-be-started power module in the current source mode and changing the given current from the first initial current to the target current includes: outputting from the first initial current to the target current at a preset rate, by the to-be-started power module.

Optionally, the switching the to-be-started power module to the voltage source mode includes: switching the to-be-started power module to a bus voltage source mode.

Optionally, the switching the to-be-started power module to the bus voltage source mode includes: acquiring a voltage reference and voltage feedback of the to-be-started power module before the switch; generating an inductor current reference or a high-voltage current reference based on the voltage reference and the voltage feedback; and controlling the voltage across the direct current bus based on the inductor current reference or the high-voltage current reference.

Optionally, the generating the inductor current reference or the high-voltage current reference based on the voltage reference and the voltage feedback includes: acquiring the sampled port current by a current controller of the to-be-started power module; and calculating the inductor current reference or the high-voltage current reference based on the voltage reference, the voltage feedback and the sampled port current, by a voltage controller of the to-be-started power module.

Optionally, the controlling the to-be-started power module to start in the current source mode includes: acquiring an operating state of the to-be-started power module before the switch; and shutting down the to-be-started power module before stating the to-be-started power module in the current source mode, if the to-be-started power module is operating in a port voltage source mode before the switch.

Optionally, the method further includes: shutting down the original power module or staring the original power module in the current source mode in which a given current equals to a second initial current, while controlling the voltage across the direct current bus.

In the present disclosure, an operating mode switching signal for the on-board charger system is acquired and then it is determined to switch from one power module to another power module in the switch from one operating mode to another operating mode. For example, a switch from the power factor correction converter that serves as the original power module to the high-voltage direct current converter that serves as the to-be-started power module to control the voltage across the direct current bus is determined. The to-be-started power module is controlled, based on the operating mode switching signal, to start in the current source mode, and a given current is adapted to an operating condition until the power demand of the system is met. That is, the to-be-started power module gradually fulfils the power demand of the system during the startup, thereby avoid the power outage at the low-voltage port. Then, the to-be-started power module is switched to the voltage source mode. That is, the to-be-started power module fulfils the power demand of the entire system. Throughout the switch, the voltage across the direct current bus remains unchanged. The original power module, for example, is shut down or switched to a current source mode in which a second initial current approximates zero. Therefore, the switch between operating modes is implemented while the voltage across the direct current bus remains unchanged.

In a second aspect, a device for controlling the on-board charger system to switch between operating modes is provided in the present disclosure. The device includes an acquiring unit and a processing unit. The acquiring unit is configured to acquire an operating mode switching signal for the on-board charger system. The operating mode switching signal is indicative of a switch from an original power module to a to-be-started power module to control a voltage across the direct current bus. The processing unit is configured to: control, based on the operating mode switching signal, the to-be-started power module to start in a current source mode and adapt a given current to an operating condition until a power demand of the system is met; and switch the to-be-started power module to a voltage source mode and control the to-be-started power module to control the voltage across the direct current bus.

The device for controlling the on-board charger system to switch between operating modes implements the method for controlling the on-board charger system to switch between operating modes, and has all the same technical effects as the method. Therefore, the device is not detailed herein.

In a third aspect, an on-board charger system is provided in the present disclosure. The on-board charger system includes a computer-readable storage medium storing a computer program, and a processor. The processor executes the computer program to implement the method as detailed above.

The on-board charger system implements the method as described above, and thus has all the same technical effects as the method. Therefore, the on-board charger system is not detailed herein.

In a fourth aspect, a computer-readable storage medium is provided in the present disclosure. The computer-readable storage medium stores a computer program that, when executed by a processor, implements the method as detailed above.

The computer-readable storage medium implements the method as described above, and thus has all the same technical effects as the method. Therefore, the computer-readable storage medium is not detailed herein.

### BRIEF DESCRIPTION OF THE DRAWINGS

For more clearly illustrating technical solutions in the embodiments of the present application or the technical solution in the conventional technology, drawings referred to describe the embodiments or the conventional technology will be briefly described hereinafter. Apparently, the drawings in the following description show only several embodiments of the present application. For those skilled in the art, other drawings may be obtained based on the structures shown by these drawings without any creative efforts.
Figure 1 is a schematic structural diagram illustrating an on-board charger system according to the conventional technology;
Figure 2 is a schematic diagram illustrating a switch by the on-board charger system from one power module to another power module according to the conventional technology;
Figure 3 is a schematic flowchart illustrating a method for controlling the on-board charger system to switch between operating modes according to an embodiment of the present disclosure;
Figure 4 is a schematic structural diagram illustrating a controller of a power factor correction converter according to an embodiment of the present disclosure;
Figure 5 is a schematic structural diagram illustrating a controller of a high-voltage direct current converter according to an embodiment of the present disclosure;
Figure 6 is a schematic structural diagram illustrating a controller of a low-voltage direct current converter according to an embodiment of the present disclosure;
Figure 7 is a schematic diagram illustrating a switch from one power module to another power module in the method according to an embodiment of the present disclosure; and
Figure 8 is a circuit diagram illustrating an on-board charger system according to an embodiment of the present disclosure.

### DETAILED DESCRIPTION

Embodiments of the present disclosure are described in detail below in conjunction with the drawings, so that the above objectives, features and advantages of the present disclosure are more comprehensible.

It should be noted that the terms such as "first" and "second" in the specification, claims, and the drawings of the present disclosure are intended to distinguish similar objects rather than describe a particular sequence or order. It should be understood that these terms may be exchanged in appropriate cases, such that the embodiments of the present disclosure can be implemented in an order different from the order shown or described herein.

It should be noted that, terms such as "arrange", "install", "connect" and "link" in the description of the present disclosure should be understood in a broader sense unless otherwise specified. For example, the connection may be fixed, detachable, integral, mechanical, direct, indirect, or internal communication between two components. Those skilled in the art should understand specific meanings of the above terms in the present disclosure based on specific conditions.

In the description of the specification, the terms "embodiments", "an embodiment", and "an implementation" indicates that the features, structures, materials or attributes specified in such embodiment or implementation are included in at least one embodiment or implementation of the present application. In the specification, schematic expressions of the above terms do not necessitate the same embodiments or implementations. Further, the listed features, structures, materials or necessitate can be combined in one or more embodiments or implementations in an appropriate manner.

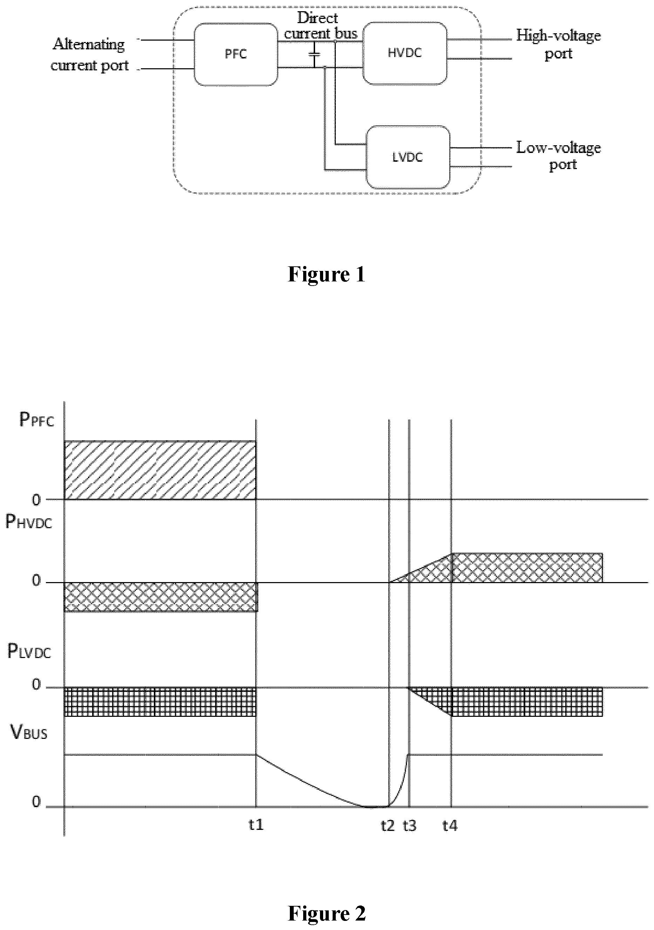

Figure 1 is a schematic diagram illustrating an on-board charger system according to the conventional technology. The on-board charger system includes three ports, namely, an alternating current port, high-voltage port, and low-voltage port, through which electric energy flows. The on-board charger system is necessary for vehicles powered by electrical energies and has the functions of charging the power battery, supplying power to the low-voltage electrical appliances, and supplying power to the alternating current port, etc. The on-board charger system can operate in various modes. The on-board charger system includes a PFC (power factor correction) converter, an HVDC (high-voltage direct current) converter, and an LVDC (low-voltage direct current) converter respectively connected to the three ports. The PFC converter, the HVDC converter, and the LVDC converter share a same direct current bus. The PFC converts alternating current power into direct current power and supplies the direct current power to the high-voltage port and low-voltage port through the direct current bus. The PFC also converts the direct current power into alternating current power and supplies the direct current power to a load at the alternating current port. The HVDC converter receives power from the direct current bus to charge the high-voltage battery. The HVDC converter also receives power from the high-voltage battery and supplies the received power to the alternating current port and the low-voltage port through the direct current bus. The LVDC converter receives power from the direct current bus and supplies the received power to a low-voltage battery and low-voltage electrical appliances, such as an air conditioner, a water pump, a headlight at the low-voltage port.

When no alternating current charging station is connected to the alternating current port, the high-voltage battery at the high-voltage port supplies power to the LVDC port through the HVDC converter and the direct current bus. In thin case, the bus voltage is controlled by the HVDC converter. When an alternating current charging station is connected to the alternating current port to supply power to the high-voltage port and the low-voltage port, the HVDC converter switches to a charging mode to charge the high-voltage battery. The charging station supplies power to the LVDC converter through the PFC converter and direct current bus. In this case, the bus voltage is controlled by the PFC converter. As the on-board charger system switches from an operating mode in which the high-voltage port supplies power to an operating mode in which the alternating current port supplies power, the converter that controls the bus voltage is different. In order to avoid a drastic change in the control signal caused by directly switching one mode to another and the resulted breakdown, the entire on-board charger system is turned off, and then is restarted in the later operating mode, resulting in a power outage of the electrical appliances at the low-voltage port during shutdown and restart. Similarly, other switch between operating modes involving a different bus voltage source also results in a power outage at the low-voltage port.

As shown in Figure 2, which illustrates a switch from an operating mode in which the charging station supplies power through the power factor correction converter to control the voltage across the direct current bus to an operating mode in which the high-voltage battery supplies power through the high-voltage direct current converter to control the voltage across the direct current bus, and changes in power and the voltage across the direct current bus. In Figure 2, the horizontal axis shoes the time, and the vertical axis shows the voltage across the direct current bus (represented as VBUS), the power of the low-voltage direct current converter (represented as PLVDC), the power of the high-voltage direct current converter (represented as PHVDC) and the power of the power factor correction converter (represented as PPFC) from bottom to top. A positive power (e.g., greater than 0 on the vertical axis) indicates power transmitted to the bus. A negative power (e.g., less than 0 on the vertical axis) indicates power received from the bus. In order to switch the operating mode in which the charging station supplies power through the power factor correction converter to the operating mode in which the high-voltage battery supplies power through the high-voltage direct current converter. The three converters are shut down at a moment t1. Since t1, the voltage across the direct current bus decrease to zero at t2, and then the high-voltage direct current converter supplies power to the direct current bus until t3. Since t3, the power supplied to the low-voltage port increases from zero until t4. It can be seen that the electrical appliances at the low-voltage port suffers a long power outage from t1 to t4 in the switch by the on-board charger system between operating modes.

In order to solve the above technical problem, a method for controlling the on-board charger system to switch between operating modes is provided according to the present disclosure. The method includes the following steps from S1 to S3.

In S1, an operating mode switching signal for the on-board charger system is acquired. The operating mode switching signal is indicative of a switch from an original power module to a to-be-started power module to control a voltage across a direct current bus.

In S2, the to-be-started power module is controlled, based on the operating mode switching signal, to start in a current source mode and adapt a given current to an operating condition until a power demand of the system is met.

In S3, the to-be-started power module is switched to a voltage source mode, and controls the voltage across the direct current bus.

It should be noted that the on-board charger system has six operating modes. In order to control the on-board charger system to switch from one operating mode to another, the control device acquires the operating mode switching signal for the on-board charger system, thereby facilitating the subsequent switch by the to-be-started power module between operating modes. Then, the control device controls, based on the acquired operating mode switching signal, the to-be-started power module to start in the current source mode and to adapt the given current to the actual operating condition until the power demand of the system is met. Subsequently, the control device controls the to-be-started power module to switch to the voltage source mode, and controls the to-be-started power module to control the voltage across the direct current bus. In other words, through the transition from the original power module controlling the voltage across the direct current bus to the to-be-started power module controlling the voltage across the direct current bus, the switch by the to-be-started power module between operating modes is implemented with the voltage across the direct current bus remaining unchanged.

In the embodiments, the operating mode switching signal for the on-board charger system is acquired and then it is determined to switch from one power module to another power module in the switch from one operating mode to another operating mode. For example, a switch from the power factor correction converter that serves as the original power module to the high-voltage direct current converter that serves as the to-be-started power module to control the voltage across the direct current bus is determined. The to-be-started power module is controlled, based on the operating mode switching signal, to start in the current source mode, and a given current is adapted to an operating condition until the power demand of the system is met. That is, the to-be-started power module gradually fulfils the power demand of the system during the startup, thereby avoid the power outage at the low-voltage port. Then, the to-be-started power module is switched to the voltage source mode. That is, the to-be-started power module fulfils the power demand of the entire system. Throughout the switch, the voltage across the direct current bus remains unchanged. The original power module, for example, is shut down or switched to a current source mode in which a second initial current approximates zero. Therefore, the switch between operating modes is implemented while the voltage across the direct current bus remains unchanged.

Details about the six operating modes of the on-board charger system as mentioned above are described as follows.

When alternating-current power is supplied to a vehicle through the on-board charger system, the alternating current charging station supplies power to the high-voltage battery, the low-voltage battery and electrical appliances at the low-voltage port through the power factor correction converter. The voltage across the direct current bus is controlled by the power factor correction converter, which is in the first to third operating modes depending on the flow direction of the electric energy.

In the first operating mode, the alternating current charging station controls the voltage across the direct current bus through the power factor correction converter. The high-voltage direct current converter receives power from the direct current bus to charge the high-voltage battery. The low-voltage direct current converter receives power from the direct current bus to charge the electrical appliances at the low-voltage port.

In the second operating mode, the alternating current charging station controls the voltage across the direct current bus through the power factor correction converter. The high-voltage direct current converter receives power from the direct current bus to charge the high-voltage battery. Compared with the first operating mode, the low-voltage direct current converter does not operate to supply power to the low-voltage port in the second operating mode.

In the third operating mode, the alternating current charging station controls the voltage across the direct current bus through the power factor correction converter. The low-voltage direct current converter receives power from the direct current bus to supply power to the electrical appliances at the low-voltage port. Compared with the first operating mode, the high-voltage direct current converter does not operate to charge the high-voltage battery at the high-voltage port in the third operating mode.

After the alternating current charging station stops charging the vehicle or is disconnected from the vehicle, the high-voltage battery supplies power to the low-voltage battery at the low-voltage port and electrical appliances at the alternating current port through the high-voltage direct current converter. In this case, the high-voltage direct current converter controls the voltage across the direct current bus, in the fourth to sixth operating modes.

In the fourth operating mode, the high-voltage battery controls the voltage across the direct current bus through the high-voltage direct current converter. The power factor correction converter receives power from the direct current bus to supply power to the electrical appliances at the alternating current port. The low-voltage direct current converter receives power from the direct current bus to supply power to the electrical appliances at the low-voltage port.

In the fifth operating mode, the high-voltage power battery controls the voltage across the direct current bus through the high-voltage direct current converter. The power factor correction converter receives power from the direct current bus to supply power to the electrical appliances at the alternating current port. Compared with the fourth operating mode, the low-voltage direct current converter does not operate to supply power to the low-voltage port in the fifth operating mode.

In the sixth operating mode, the high-voltage battery controls the voltage across the direct current bus through the high-voltage direct current converter. The low-voltage direct current converter receives power from the direct current bus to supply power to the electrical appliances at the low-voltage port. Compared with the fourth operating mode, the power factor correction converter does not operate to supply power to the electrical appliances at the alternating current port in the sixth operating mode.

The switch between two of the first to third operating modes and the switch between two of the fourth to sixth operating modes do not involve the switch between voltage sources supplying power to the direct current bus in the system. However, the switch between one of the first to third operating modes and one of the fourth to sixth operating modes involve the switch between voltage sources supplying power to the direct current bus in the system. For example, the switch from the first operating mode to the fourth operating mode is generally performed when the alternating current charging station stops charging the vehicle or is disconnected from the vehicle. In this example, the power factor correction converter serves as the original power module, and the high-voltage direct current converter serves as the to-be-started power module.

For example, in order to perform the switch from the first operating mode to the fourth operating mode, the control device acquires the operating mode switching signal for the on-board charger system, thereby facilitating the subsequent switch by the to-be-started power module between operating modes. The original power module is the power factor correction converter, and the to-be-started power module is the high-voltage direct current converter. Then, the control device controls, based on the acquired operating mode switching signal, the high-voltage direct current converter that serves as the to-be-started power module to start in the current source mode and to adapt the given current to the actual operating condition until the power demand of the system is met. Subsequently, the control device controls the to-be-started power module to switch to the voltage source mode, and controls the to-be-started power module to control the voltage across the direct current bus.

In the switch from the fourth operating mode to the first operating mode, the original power module is the high-voltage direct current converter, and the to-be-started power module is the power factor correction converter. The control device controls, based on the acquired operating mode switching signal, the power factor correction converter that serves as the to-be-started power module to start in the current source mode and to adapt the given current to the actual operating condition until the power demand of the system is met. Subsequently, the control device controls the to-be-started power module to switch to the voltage source mode, and controls the to-be-started power module to control the voltage across the direct current bus.

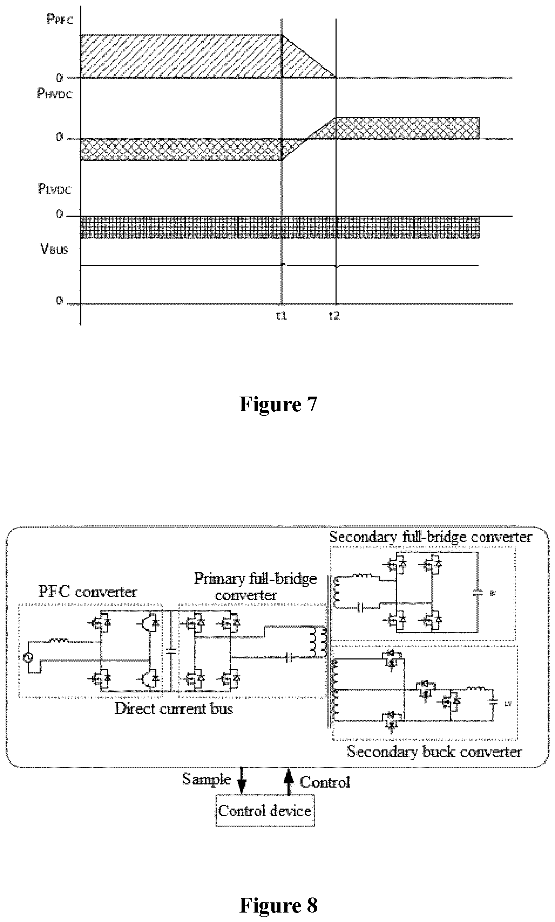

Reference is made to Figure 1 and Figure 8. The circuit diagram of the on-board charger system as shown in Figure 8 is one of the embodiments of the on-board charger system as shown in Figure 1. In other words, the structure of the on-board charger system in Figure 1 is not limited to the embodiment as shown in Figure 8. The on-board charger system is described in detail below in conjunction with Figure 8. The on-board charger system includes a power factor correction converter, a high-voltage direct current converter, a low-voltage direct current converter and a control device. In Figure 1, PFC denotes the power factor correction converter, HVDC denotes the high-voltage direct current converter, and LVDC denotes the low-voltage direct current converter. As shown in Figure 8, the high-voltage direct current converter and the low-voltage direct current converter share the same primary full-bridge converter. For example, the high-voltage direct current converter includes the primary full-bridge converter and a secondary full-bridge converter, and the low-voltage direct current converter includes the primary full-bridge converter and a secondary buck converter. Therefore, the on-board charger system is simplified in structure, the costs are reduced and the size of the circuit is decreased.

In Figure 8, the power factor correction converter, the high-voltage direct current converter and the low-voltage direct current converter are electrically connected to the control device. The control device acquires the electrical parameters of the three converters and the direct current bus. Further, in the switch, for example, from the first operating mode to the fourth operating mode, the control device controls the high-voltage direct current converter that serves as the to-be-started power module to start in the current source mode and adapt the given current to the operating condition until the power demand of the system is met. Then, the control device controls the to-be-started power module to switch to the voltage source mode and control the voltage across the direct current bus. The control device controls the power factor correction converter, that serves as the original power module, to be shut down or switched to a current source mode in which a current reference approximates zero.

In an embodiment of the present disclosure, the power demand of the system is the total power supplied to the system.

It should be noted that the power demand of the system is the total power supplied to the system, that is, the total power supplied to the system is determined as the total load that the to-be-started power module, for example, the high-voltage direct current converter after switching to a different operating mode, bears. Therefore, the to-be-started power module can fully drive the load of the entire system. Further, the vehicle can operate properly. The loads of the system include at least the electrical appliances at the alternating current port, the low-voltage battery and the electrical appliances such as the air conditioner and the water pump at the low-voltage port.

In an embodiment of the present disclosure, the to-be-started power module is controlled to start in the current source mode and adapt the given current to the operating condition until the power demand of the system is met as follows. The to-be-started power module is started in the current source mode, and the given current is changed from a first initial current to a target current. The first initial current depends on an operating state of the to-be-started power module before the switch. The target current depends on the total power supplied to the system and a port voltage of the to-be-started power module.

It should be noted the to-be-started power module is started in the current source mode, and the given current is changed from the first initial current to the target current, that is, the to-be-started power module outputs a current that changes from the first initial current to the target current until the to-be-started power module, e.g., the high-voltage direct current converter, carries all the loads of the system. Simultaneously, the original power module, e.g., the power factor correction converter outputs power approximates zero, in adequate preparation for the switch from the original power module to the to-be-started power module in the on-board charger system to control the voltage across the direct current bus. In this case, the original power module, i.e., the power factor correction converter bears approximate zero load of the system. Therefore, the instantaneous power outage caused by the shutdown of the original power module approximates zero, and thus no significant disturbance applied to the voltage across the direct current bus. In another example, the original power module is the high-voltage direct current converter, and the to-be-started power module is the power factor correction converter. Details in this example can be derived from the previous example in this paragraph and thus are not described.

In addition, the first initial current is gradually or a suddenly changes to the target current. In the case that the first initial current gradually changes to the target current, the to-be-started power module operating in the current source mode gradually bears all the loads in the system. Therefore, the control signals of the respective converters can be stable and all the loads in the system can be stable during the switch between operating modes. In the case that the first initial current suddenly changes to the target current, the to-be-started power module can quickly bear all the loads in the system, thereby shortening the time spent on the switch between operating modes and boosting efficiency.

In the embodiments, the above three converters are controlled as follows.

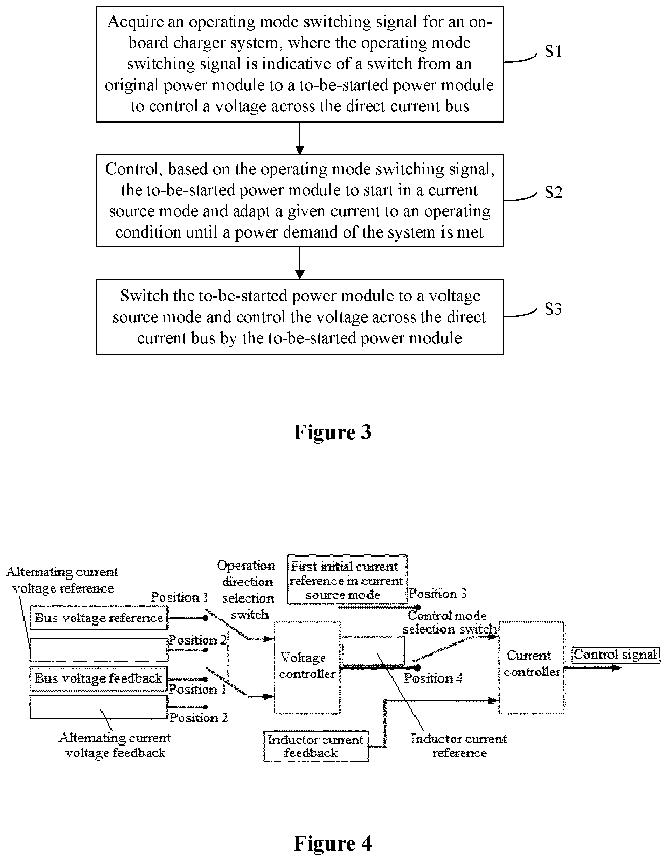

The power factor correction converter that serves as the original power module adopts the double-loop controller involving voltage and current as shown in Figure 4, and has a bus voltage source mode and an alternating current voltage source mode. When the operation direction selection switch is set at the position 1 and the operation mode selection switch is set at the position 4, the power factor correction converter operates in the bus voltage source mode. When the operation direction selection switch is set at the position 2 and the operation mode selection switch is set at the position 4, the power factor correction converter operates as a port voltage source. When the operation mode selection switch is set at the position 3, the power factor correction converter operates in the current source mode.

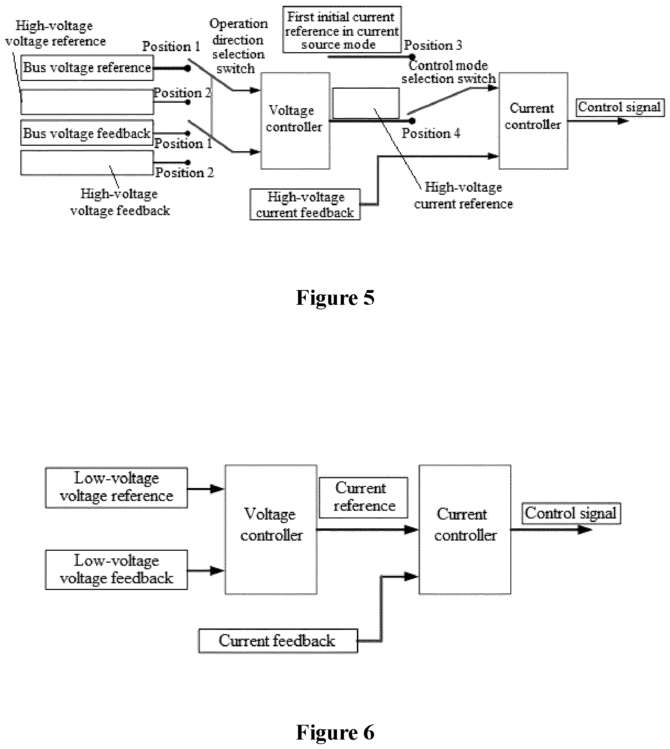

The high-voltage direct current converter that serves as the to-be-started power module adopts the double-loop controller involving voltage and current as shown in Figure 5, and has a bus voltage source mode and a high-voltage port voltage/current source mode. When the operation direction selection switch is set at the position 1 and the operation mode selection switch is set at the position 4, the high-voltage direct current converter operates in the bus voltage source mode. When the operation direction selection switch is set at the position 2, and the operation mode selection switch is set at the position 4, the high-voltage direct current converter operates as the port voltage source. When the operation mode selection switch is set at the position 3, the high-voltage direct current converter operates in the current source mode.

The low-voltage direct current converter adopts the double-loop controller involving voltage and current as shown in Figure 6. The voltage controller of the low-voltage direct current converter calculates an output current corresponding an output voltage reference based on a voltage reference and voltage feedback, as a reference of the current controller of the low-voltage direct current converter. The current controller of the low-voltage direct current converter calculates the control signal for the low-voltage direct current converter based on the reference and the current feedback. That is, the voltage controller of the low-voltage direct current converter calculates a current reference, as the reference of the current controller of the low-voltage direct current converter. For example, the low-voltage direct current converter is desired to output a voltage of 12V The voltage controller of the low-voltage direct current converter calculates an output current corresponding 12V, and the current reference. The controller of the power factor correction converter and the controller of the high-voltage direct current converter both have an operation direction selection switch and an operation mode selection switch that are software-implemented.

As shown in Figure 7, the on-board charger system operates in the first operating mode, and the voltage across the direct current bus is controlled by the power factor correction converter before t1. For the controller of the power factor correction converter as shown in Figure 4, the operation direction selection switch is set at the position 1, and the operation mode selection switch is set at the position 4. The high-voltage direct current converter supplies power to the high-voltage battery. For the controller of the high-voltage direct current converter as shown in Figure 5, the operation direction selection switch is set at the position 2, and the operation mode selection switch is set at the position 4. The low-voltage direct current converter controls the voltage supplied to the low-voltage port.

The high-voltage direct current converter is started in the current source mode at t1. The operation mode selection switch of the high-voltage direct current converter is set at the position 3. The high-voltage direct current converter starts outputting the first initial current in the current source mode. The first initial current depends on the operating state of the to-be-started power module before the switch. The target current is the current that the to-be-started power module outputs in order to bear all the loads in the system. The target current is calculated based on the total power of the system and the port voltage of the to-be-started power module.

Since t1, the given current of the to-be-started power module is changed from the first initial current to the target current at t2. The high-voltage direct current converter gradually bears all the loads in the system and the outputted power of the power factor correction converter gradually decreases in the period of time from t1 to t2.

At t2, the operation direction selection switch of the high-voltage direct current converter is switched from the position 2 to the position 1, as shown in Figure 5 and Figure 7. The voltage rating of the bus is determined as a voltage reference of the bus. The inductor current reference calculated by the voltage controller of the high-voltage direct current converter is almost equal to the target current. Therefore, the switch between operating modes results in no drastic change in the control signal, and the on-board charger system can operate stably.

In an embodiment of the present disclosure, the first initial current is determined based on the operating state of the to-be-started power module before the switch as follows. The operating state and a sampled port current of the to-be-started power module before the switch is acquired. The sampled port current is determined as the first initial current.

It should be noted that the to-be-started power module generally operates in the port voltage source mode before the switch. The switch being performed directly most likely results in a significant change in load of the system. Therefore, the operating state of the to-be-started power module before the switch is acquired to flexibly set the first initial current before the switch, for the purpose of applying no significant disturbance on the voltage across the direct current bus during the switch. Since the to-be-started power module operates as the port voltage source before the switch, the sampled port current, i.e., the current at the high-voltage port currently sampled by the current controller of the to-be-started power module is determined as the first initial current, resulting in no significant fluctuation in the control signal and the voltage across the direct current bus throughout the switch by the to-be-started power module.

In addition, the mode selection switch of the to-be-started power module is at the position 2 (implemented by software) before the switch, facilitating the acquisition of the port current of the to-be-started power module before the switch to be fed back to the current controller of the to-be-started power module. The sampled port current is the inductor current or the high-voltage port current. The current controller performs proportional, integral operations and the like to obtain the control signal for the bus voltage source mode.

In an embodiment of the present disclosure, the sampled port current is an alternating current port current or a high-voltage port current of the on-board charger system.

For example, the original power module is the power factor correction converter, and the to-be-started power module is the high-voltage direct current converter. The sampled port current is acquired at the high-voltage port. In this case, the switching signal for the on-board charger system is indicative of the switch from the power factor correction converter serving as to the high-voltage direct current converter serving as the to-be-started power module to control the voltage across the direct current bus. In another example, the original power module is the high-voltage direct current converter, and the to-be-started power module is the power factor correction converter. The sampled port current is acquired at the alternating current port. In this case, the switching signal for the on-board charger system is indicative of the switch from the high-voltage direct current converter serving as to the power factor correction converter serving as the to-be-started power module to control the voltage across the direct current bus. The current sampled at the alternating current port or the high-voltage port is determined as the sampled port current, and the to-be-started power module is started at the sampled port current instead of zero current, thereby not only shortening the time spent on the switch between operating modes but also avoiding significant fluctuation in the voltage across the direct current bus.

In an embodiment of the present disclosure, the operating state of the to-be-started power module before the switch is acquired as follows. If the to-be-started power module is in a shutdown state before the switch, the first initial current is zero. If the to-be-started power module is being charged or discharged before the switch, the currently sampled current, for example, at the high-voltage port or the alternating current port, is determined as the first initial current.

If being in the shutdown state before the switch, the to-be-started power module starts from zero current that serves as the first initial current, and gradually supplies the power that the original power module previously supplies. In this way, the voltage is steady and therefore resulted no fluctuation in the voltage across the direct current bus. The current sampled at the alternating current port is determined as the first initial current if the to-be-started power module is being charged before the switch, and the current sampled at the high-voltage port is determined as the first initial current if the to-be-started power module is being discharged before the switch. In this way, the voltage across the direct current bus can remain unchanged.

In an embodiment of the present disclosure, the to-be-started power module is started in the current source mode as follows. The operation mode selection switch of the to-be-started power module is switched to the current source mode and the to-be-started power module is started in the current source mode.

It should be noted that, as shown in Figure 5, the controller of the to-be-started power module includes a voltage controller and a current controller, and has a bus voltage source mode, a port voltage source mode and a current source mode. The operation mode selection switch of the to-be-started power module is switched to the current source mode, and then the to-be-started power module is started and operates in the current source mode, to gradually outputs the power as demanded by the system, e.g., the total power of the system, with no impact on the voltage across the direct current bus.

In an embodiment of the present disclosure, the to-be-started power module is started in the current source mode and the given current is changed from the first initial current to the target current as follows. The to-be-started power module changes its output current from the first initial current to the target current at a preset rate.

It should be noted that when the to-be-started power module is stared in the current source mode, the control device controls the to-be-started power module to change its output current from the first initial current to the target current gradually at the preset rate. In this way, the control signals of the respective converters and the voltage across the direct current bus can be stable while the to-be-started power module steadily outputs the total power of the system. The preset rate is set on the control device or the to-be-started power module.

In an embodiment of the present disclosure, the given current is changed from the first initial current to the target current as follows. The first initial current changes to the target current within 0 to 2seconds.

It should be noted that during the switch between operating modes, the to-be-started power module is started in the current source mode, and the first initial current changes to the target current within 0 to 2 seconds. In other words, the first initial current quickly changes, for example, steadily increases, to the target current, for quickly staring the to-be-started power module. Therefore, no resulted significant change in the power supplied to the electrical appliances at the low-voltage port during the switch.

In an embodiment of the present disclosure, the to-be-started power module is switched to the voltage source mode as follows. The to-be-started power module is switched to the bus voltage source mode.

When finished starting in the current source mode, i.e., outputting the given current that has reached the target current, the to-be-started power module outputs the total power of the system. Then, the to-be-started power module is switched from the current source mode to the bus voltage source mode. In this way, the voltage across the direct current bus can be stable throughout the switch between operating modes by the to-be-started power module.

In an embodiment of the present disclosure, the to-be-started power module is switched to the bus voltage source mode as follows. A voltage reference and voltage feedback of the to-be-started power module before the switch are acquired. An inductor current reference or a high-voltage current reference is generated based on the voltage reference and the voltage feedback. The voltage across the direct current bus is controlled based on the inductor current reference or the high-voltage current reference.

The voltage reference and the voltage feedback of the to-be-started power module before the switch are acquired, for providing a parameter basis for the to-be-started power module to control the voltage across the direct current bus subsequentially. The voltage across the direct current bus sampled before the switch is determined as the voltage feedback of the voltage controller of the to-be-started power module, and the target voltage is determined as the voltage reference of the voltage controller of the to-be-started power module. The voltage controller of the to-be-started power module generates the inductor current reference and the high-voltage current reference based on the voltage reference and the voltage feedback, as the input of the current controller of the to-be-started power module, for providing a parameter basis for starting the to-be-started power module in the current source mode. If the to-be-started power module is the power factor correction converter, the voltage controller of the to-be-started power module generates the inductor current reference based on the voltage reference and the voltage feedback. If the to-be-started power module is the high-voltage direct current converter, the voltage controller of the to-be-started power module generates the high-voltage current reference based on the voltage reference and the voltage feedback. The voltage across the direct current bus is controlled base on the inductor current reference or the high-voltage current reference. In other words, the inductor current reference or the high-voltage current reference before the switch, is determined as the current reference of the to-be-started power module in the current source mode after the switch.

In an embodiment of the present disclosure, the inductor current reference or the high-voltage current reference is generated based on the voltage reference and the voltage feedback as follows. Before the switch by the to-be-started power module, the current controller of the to-be-started power module samples the port current, and the voltage controller of the to-be-started power module calculates the inductor current reference or the high-voltage current reference based on the voltage reference, the voltage feedback and the sampled port current.

Before the switch by the to-be-started power module, the current controller of the to-be-started power module samples the port current. If the to-be-started power module is the power factor correction converter, the port current is sampled at the alternating current port, and the voltage controller in the power factor correction converter calculates the inductor current reference based on the voltage reference, the voltage feedback and the sampled port current. If the to-be-started power module is the high-voltage direct current converter, the port current is sampled at the high-voltage port, and the voltage controller in the high-voltage direct current converter calculates the high-voltage current reference based on the voltage reference, the voltage feedback and the sampled port current. In other words, the sampled port current before the switch, for example, at the alternating current port or the high-voltage port, as the initial current calculated by the voltage controller for the voltage source mode after the switch. In this way, the to-be-started power module can acquire the inductor current reference or the high-voltage current reference accurately after the switch.

In an embodiment of the present disclosure, the to-be-started power module is started in the current source mode as follows. The operating state of the to-be-started power module before the switch is acquired. If the to-be-started power module is operating in the port voltage source mode before the switch, the to-be-started power module is shut down before started in the current source mode.

The operating state of the to-be-started power module before the switch is acquired, facilitating the starting the to-be-started power module. If the to-be-started power module is operating in the port voltage source mode before the switch, the to-be-started power module is shut down before started in the current source mode, thereby preventing the sampled port current of the to-be-started power module before the switched from interfering with the starting of the to-be-started power module in the current source control. Therefore, the given current can be adapted steadily.

In an embodiment of the present disclosure, the method for controlling the on-board charger system be switch between operating modes further includes: controlling the original power module to be shut down or to start in a current source mode in which a given current equals to a second initial current (approximating zero) while controlling the voltage across the direct current bus.

After the to-be-started power module is switched to the voltage source mode, the original power module is shut down or started in the current source mode in which the given current equals to the second initial current depending on the actual operating conditions, while controlling the voltage across the direct current bus. The second initial current approximates zero. The on-board charger system completely switches to the different operating mode at this point.

In an example, the original power module is to operate in the port voltage source mode after the switch. For the controller of the original power module, the operation direction selection switch is set to the position 2 (implemented by software), and the operation mode selection switch is set to the position 4 (implemented by software). A target port voltage (e.g., the target or desired voltage at the alternating current port or the high-voltage port) is determined as the voltage reference of the voltage controller of the original power module. The sampled port voltage (at the alternating current port or the high-voltage port) is determined as the voltage feedback of the voltage controller of the original power module. The sampled port current (at the alternating current port or the high-voltage port) is determined as the current feedback of the current controller of the original power module. Finally, the control signal for the port voltage source mode is acquired.

The on-board charger system switches from the first operating mode to the fourth operating mode as follows. The on-board charger system is operating in the first operating mode, and the PFC converter controls the voltage across the direct current bus and supplies power to the high-voltage and low-voltage ports. The output current at the high-voltage port corresponding to total power demanded by the system is calculated from an equation I=P/U based on a power P at the low-voltage port and a voltage U at the high-voltage port, as the target current. The HVDC converter is switched to the current source mode (by setting the operation mode selection switch to the position 3). The currently sampled current at the high-voltage port is determined as the first initial current. The HVDC converter is started in the current source mode, and its given current is changed from the first initial current to the target current. The HVDC converter is switched from the current source mode to the bus voltage source mode (by setting the operation direction selection switch to the position 1 and the operation mode selection switch to the position 4), and controls the voltage across the direct current bus simultaneously with the PFC converter is shut down. The PFC converter is started in the alternating current voltage source mode (by setting the operation direction selection switch to the position 2 and the operation mode selection switch to the position 4). The on-board charger system completely switches to the fourth operating mode from the first operating mode at this point. The HVDC converter supplies power to the alternating current port and the low-voltage port through the direct current bus.

A device for controlling the on-board charger system to switch between operating modes is provided according to another embodiment of the present disclosure. The device includes an acquiring unit and a processing unit. The acquiring unit is configured to acquire an operating mode switching signal for the on-board charger system. The operating mode switching signal is indicative of a switch from an original power module to a to-be-started power module to control a voltage across the direct current bus. The processing unit is configured to: control, based on the operating mode switching signal, the to-be-started power module to start in a current source mode and adapt a given current to an operating condition until a power demand of the system is met; and switch the to-be-started power module to a voltage source mode and control the to-be-started power module to control the voltage across the direct current bus.

The device for controlling the on-board charger system to switch between operating modes implements the method for controlling the on-board charger system to switch between operating modes, and has all the same technical effects as the method. Therefore, the device is not detailed herein.

An on-board charger system is provided according to another embodiment of the present disclosure. The on-board charger system includes a computer-readable storage medium storing a computer program, and a processor. The processor executes the computer program to implement the method as detailed above. The processor may be implemented by the control device as shown in Figure 8. The on-board charger system also includes an original power module and a to-be-started power module.

A computer-readable storage medium storing a computer program is provided according to another embodiment of the present disclosure. The computer program, when executed by a processor, implements the method as detailed above.

Although the present application is disclosed as above, the protection scope of the present application is not limited thereto. Without departing from the spirit and scope of the present application, those skilled in the art can make various changes and modifications, and all of which should fall into the protection scope of the present application.

## Claims

1. A method for controlling an on-board charger system to switch between operating modes, comprising:
acquiring an operating mode switching signal for the on-board charger system, wherein the operating mode switching signal is indicative of a switch from an original power module in the on-board charger system to a to-be-started power module in the on-board charger system to control a voltage across a direct current bus;
controlling the to-be-started power module to start in a current source mode and adapt a given current to an operating condition until a power demand of the on-board charger system is met, based on the operating mode switching signal; and
switching the to-be-started power module to a voltage source mode and controlling the voltage across the direct current bus by the to-be-started power module.

2. The method according to claim 1, wherein
the power demand is a total power demanded by the on-board charger system.

3. The method according to claim 2, wherein the controlling the to-be-started power module to start in a current source mode and adapt a given current to an operating condition until a power demand of the on-board charger system is met comprises:
starting the to-be-started power module in the current source mode and changing the given current from a first initial current to a target current, wherein the first initial current depends on an operating state of the to-be-started power module before the switch, and the target current depends on the total power and a port voltage of the to-be-started power module.

4. The method according to claim 3, wherein the first initial current is determined, depending on the operating state of the to-be-started power module before the switch, by:
acquiring the operating state and a sampled port current of the to-be-started power module before the switch; and
determining the sampled port current as the first initial current.

5. The method according to claim 4, wherein
the sampled port current is acquired at an alternating current port or a high-voltage port of the on-board charger system.

6. The method according to claim 3, wherein the starting the to-be-started power module in the current source mode comprises:
switching an operation mode selection switch of the to-be-started power module to the current source mode and starting the to-be-started power module in the current source mode.

7. The method according to claim 3, wherein the starting the to-be-started power module in the current source mode and changing the given current from the first initial current to the target current comprises:
outputting from the first initial current to the target current at a preset rate, by the to-be-started power module.

8. The method according to claim 4, wherein the switching the to-be-started power module to the voltage source mode comprises:
switching the to-be-started power module to a bus voltage source mode.

9. The method according to claim 8, wherein the switching the to-be-started power module to the bus voltage source mode comprises:
acquiring a voltage reference and voltage feedback of the to-be-started power module before the switch;
generating an inductor current reference or a high-voltage current reference based on the voltage reference and the voltage feedback; and
controlling the voltage across the direct current bus based on the inductor current reference or the high-voltage current reference.

10. The method according to claim 9, wherein the generating the inductor current reference or the high-voltage current reference based on the voltage reference and the voltage feedback comprises:
acquiring the sampled port current by a current controller of the to-be-started power module; and
calculating the inductor current reference or the high-voltage current reference based on the voltage reference, the voltage feedback and the sampled port current, by a voltage controller of the to-be-started power module.

11. The method according to claim 1, wherein the controlling the to-be-started power module to start in the current source mode comprises:
acquiring an operating state of the to-be-started power module before the switch; and
shutting down the to-be-started power module before stating the to-be-started power module in the current source mode, if the to-be-started power module is operating in a port voltage source mode before the switch.

12. The method according to any one of claims 1 to 11, further comprising:
shutting down the original power module or staring the original power module in the current source mode in which a given current equals to a second initial current, while controlling the voltage across the direct current bus.

13. A device for controlling an on-board charger system to switch between operating modes, comprising:
an acquiring unit configured to acquire an operating mode switching signal for the on-board charger system, wherein the operating mode switching signal is indicative of a switch from an original power module in the on-board charger system to a to-be-started power module in the on-board charger system to control a voltage across a direct current bus; and
a processing unit configured to: control the to-be-started power module to start in a current source mode and adapt a given current to an operating condition until a power demand of the on-board charger system is met, based on the operating mode switching signal; and switch the to-be-started power module to a voltage source mode and control the to-be-started power module to control the voltage across the direct current bus.

14. An on-board charger system, comprising:
a computer-readable storage medium storing a computer program; and
a processor configured to control the computer program to implement the method according to any one of claims 1 to 12.

15. A computer-readable storage medium, wherein the computer-readable storage medium stores a computer program that, when executed by a processor, implements the method according to any one of claims 1 to 12.
